# EUROPÄISCHE PATENTANMELDUNG

(11) **EP 0 547 018 A2**
(43) Veröffentlichungstag der Anmeldung: **16.06.1993**
(21) Anmeldenummer: 92890211.3
(22) Anmeldetag: 01.10.1992
(51) Int. Cl.: B09B 3/00, C04B 41/45

(54) **Verfahren zum Einschliessen von Asbest**

(30) Priorität: 11.12.1991 CH 2460/91
(71) Anmelder: Schumy, Guido, A-2346 Maria Enzersdorf (AT)
(72) Erfinder: Schumy, Guido, A-2346 Maria Enzersdorf (AT)

(57) **Zusammenfassung**

Die Erfindung betrifft ein Verfahren zur Sanierung von Asbest- oder Spritzasbestisolationen zur Verhinderung des Austretens von Asbestfasern oder Asbeststaubes in die umgebende Luft, wonach die Oberflächen mit anorganischen oder organischen Schäumen versehen und damit luftdicht abgeschlossen werden.

## Beschreibung

### A

Gegenstand der hier nachfolgend beschriebenen und zugeordneten verfahrenstechn.-chem. Erfindung ist eine Verhinderung des Austretens von Asbestfasern, Asbestteilchen und Asbestpartikeln in die umgebende Luft (Auslösung aus dem Asbestmasseverband durch z.B. mechanische Einwirkung, Vibrationen oder Luftbewegung, auf die Asbestschicht) und dadurch erhöhtes Risiko zur Verursachung von Asbestose u.a.m. im menschlichen Körper.

### B

### Beschreibung der Folge der verfahrenstechn.-chem. Erfindung

I)
   Applikationsstufe 1
   Die Gesamtfläche der homogenen oder amorphen Asbest- bzw Spritzasbestisolationsmasse (AIM) wird a) mittels Kunststoff-Kunstharzlösung oder b) H₂O-Glaslösung oder ähnlicher chem. Beschaffenheit bzw Verbindung, im Aufsprüh- oder Streichprinzip imprägniert und oberflächenverfestigt.
   Zu a)
   z.B.: Acrylate, Epoxide, Polyester,Polyurethane, Silikone etc und die Derivate der Angeführten.
   Zu b)
   z.B.: Na-und Kaliwasserglasverbindungen, Kieselsäure und ihre Verbindungen und die Derivate der Angeführten.
II)
   Applikationsstufe 2
   Die Gesamtfläche der AIM wird nach I) Stufe 1 durch a) Sicherheitsgurte oder Bänder (Metall-, Kunststoff- oder vegetabilischer Herkunft) von x-beliebiger Längen- und Breitendimension oder durch b) Sicherheitsnetze (s.Herkunft a) und s.Dimensionen a) abgesichert dehde das Anbringen von IIa) oder IIb) soll möglichst "Vibrationsarm" und vorsichtig, an die AIM-Oberfläche - gar nicht (knapper Zwischenraum) oder leicht anliegend - erfolgen.
   (Diese Entscheidung muß die Begutachtung der AIM auf Grund ihrer Festigkeitseigenschaft durch einen Sachverständigen erbringen)
   Die Befestigungsmöglichkeiten von IIa) oder IIb) an der Längs-und Breitseite der AIM-Oberfläche (Natürlich unterhalb) kann in der konventionellen Art und Weise des "Verdübbelns, Verschraubens, Vernietens oder auch Verklebens" durchgeführt werden.
III)
   Applikationsstufe 3
   Die Gesamtoberfläche der AIM wird nach den Stufen 1 u 2 mit z.B. handelsüblichen (z.B. Polyurethan-Montageschaum) und verschiedenen Kunsstoffen organischer Beschaffenheit, wie z.B.: Schäume aus Styrol, Polyester, Acryl, Polyureth., etc oder b) anorganischer Beschaffenheit wie z.B.: Schäume aus Glas-, Ton- oder silikatischer Strukturschäume oder c) Mischung aus IIIa) und IIIb) mitsamt der Sicherheitsapplikationsstufe 2 - vollflächig verschäumt bzw eingeschäumt.
   (Die Schäume von IIIa) müssen nach ÖNORM B 3800 oder DIN-4102 mindestens die Brandklassifizierung B1 oder B2 aufweisen.)
   Der aufzubringende Schaumstoff kann sich von der Mindeststärke von 0,1 cm bis 10 cm und darüber bewegen.

### C

### Nebensatz des Patentanspruches

1. Die Möglichkeit Stufe 1 oder 2 oder nur 1 oder nur 2 nicht einzusetzen ist gegeben, muß aber Gegenstand eines Sachverständigengutachtens bleiben.
2. Die Stufe 3 ist niemals auszuschließen.

### D

### Hauptsatz des Patentanspruches der Erfindung

Nach Maßgabe und Einhaltung der bereits angeführten Applikationsstufen (BI,II,III) bzw des zugeordneten verfahrenstechn.-chem. Ablaufes, ist eine Möglichkeit der Einleitung von Emittierungs - und Kontaminierungsprozessen in die umgebende Luft - gegeben durch freiliegende Asbestisolationsmasseschichten bevorzugt sind Spritzasbestisolationsmassekörper - nicht mehr gegeben. (Durch den"Befestigenden Einsatz"von organischen und anorganischen Schäumen) gez.

## Patentansprüche

1. Verfahren zur Sanierung von Asbest- oder Spritzasbestisolationen zur Verhinderung des Austretens von Asbestfasern oder Asbeststaubes in die umgebende Luft, **dadurch gekennzeichnet,** daß auf die Oberflächen ein anorganischer oder organischer Schaum oder deren Gemische, insbesonders ein Polyurethanschaum, aufgetragen wird.
